Europäisches Patentamt

(19) European Patent Office

Office européen des brevets

(11) Numéro de publication : **0 021 945**
**B1**

(12) # FASCICULE DE BREVET EUROPÉEN

(45) Date de publication du fascicule du brevet :
03.11.82

(51) Int. Cl.³ : **G 01 H 9/00, G 02 F 1/11**

(21) Numéro de dépôt : **80400838.1**

(22) Date de dépôt : **10.06.80**

(54) **Hydrophone à fibre optique monomode fonctionnant par effet élasto-optique.**

(30) Priorité : **29.06.79 FR 7916899**

(43) Date de publication de la demande :
**07.01.81 (Bulletin 81/01)**

(45) Mention de la délivrance du brevet :
**03.11.82 Bulletin 82/44**

(84) Etats contractants désignés :
**DE GB NL**

(56) Documents cités :
**JOURNAL OF THE ACOUSTICAL SOCIETY OF AMERICA, vol. 64, no. 5, novembre 1978, pages 1 286-1 288 New York, U.S.A. SHAJENKO et al. : « On fiber-optic hydrophone sensitivity »**

**OPTICS AND LASER TECHNOLOGY, vol. 7, no. 4, août 1975, pages 169-174 Haywards Heath, G.B. G. JOYNES et al. : « Movement measurement by modulated lasers using frequency lock loops »**

(73) Titulaire : **THOMSON-CSF**
**173, Boulevard Haussmann**
**F-75379 Paris Cedex 08 (FR)**

(72) Inventeur : **Leclerc, Pierre**
**"THOMSON-CSF" SCPI 173, Bld Haussmann**
**F-75360 Paris Cedex 08 (FR)**
Inventeur : **Huignard, Jean-Pierre**
**"THOMSON-CSF" SCPI 173, Bld Haussmann**
**F-75360 Paris Cedex 08 (FR)**
Inventeur : **Papuchon, Michel**
**"THOMSON-CSF" SCPI 173, Bld Haussmann**
**F-75360 Paris Cedex 08 (FR)**
Inventeur : **Puech, Claude**
**"THOMSON-CSF" SCPI 173, Bld Haussmann**
**F-75360 Paris Cedex 08 (FR)**

(74) Mandataire : **Wang, Pierre et al**
**THOMSON-CSF SCPI 173, Bld Haussmann**
**F-75379 Paris Cedex 08 (FR)**

Imprimerie Jouve, 18, rue St-Denis, 75001 Paris, France

## Hydrophone à fibre optique monomode fonctionnant par effet élasto-optique

L'invention se rapporte au domaine de la détection acoustique en milieu marin et a plus particulièrement pour objet un hydrophone à fibre optique monomode fonctionnant par effet élasto-optique, utilisant les effets d'interaction entre l'onde acoustique à détecter et une fibre monomode sur laquelle cette onde acoustique agit.

Un hydrophone à fibre optique est connu de par l'article de P. SHAJENKO et al., paru dans « Journal of the Acoustical Society of America » vol. 64, n° 5, nov. 1978, p. 1286-1288. Cet hydrophone comprend une fibre optique de mesure et une fibre optique de référence, des moyens permettant de distribuer la lumière issue du laser source entre les deux fibres, et des moyens permettant de recombiner les deux ondes optiques ainsi distribuées et d'analyser le signal. Mais ces moyens sont constitués d'éléments discrets tels que lentilles, lames semi-transparentes, fentes, tous éléments susceptibles de se déplacer et nécessitant en tout état de cause d'effectuer pour chaque mesure, leur alignement précis et de s'assurer qu'ils ne subissent pas, en cours de mesure, de déplacements intempestifs qui fausseraient les résultats.

Pour pallier les inconvénients de l'art connu l'invention propose un hydrophone comportant en particulier une fibre optique monomode plongée dans l'eau où se propage l'onde sonore. La propagation des variations de pression qui provoquent par effet élasto-optique des variations des paramètres géométriques et optiques de la fibre. Une onde optique se propageant dans la fibre optique subit des variations de phase susceptibles d'être détectées par interférométrie, au moyen d'une seconde fibre optique monomode formant bras de référence. Les liaisons optiques entre la fibre optique plongée dans l'eau, qui constitue le bras de mesure, et la fibre optique de référence sont établies dans une structure optique rigide et compacte et réalisées par les techniques de l'optique intégrée de façon à éviter tout déréglage du dispositif en fonctionnement.

En outre il est prévu des moyens permettant d'introduire un déphasage sur l'un de ses bras pour maintenir le déphasage entre les deux ondes à une valeur où la sensibilité est maximale.

L'invention a donc pour objet un hydrophone à fibre optique monomode fonctionnant par effet élasto-optique, comportant une source laser monomode couplée à une plaquette de circuit optique intégré dans laquelle sont réalisés des moyens de séparation du rayonnement issu de la source vers deux premiers guides optiques intégrés et des moyens de recombinaison du rayonnement guidé par deux seconds guides optiques intégrés, une première fibre optique monomode formant bras de mesure destinée à être plongée dans un milieu d'interaction soumis à l'onde acoustique à détecter, et une seconde fibre optique monomode formant bras de référence, ces deux fibres ayant leurs extrémités rigidement couplées respectivement à l'un des premiers et à l'un des seconds guides optiques, l'hydrophone comportant en outre un modulateur de phase à commande électrique agissant sur l'un des guides optiques intégrés pour introduire un déphasage entre les ondes guidées, des moyens de détection du rayonnement émergeant des moyens de recombinaison, et un dispositif de traitement des signaux détectés destiné à fournir un signal de commande au modulateur de phase tel que le déphasage entre les deux bras indépendant de l'onde acoustique à détecter soit maintenu voisin d'un point de sensibilité maximum, le dispositif de traitement délivrant de plus un signal de mesure caractéristique de l'onde acoustique.

L'invention sera mieux comprise et d'autres caractéristiques apparaîtront à l'aide de la description qui suit en référence aux figures annexées.

La figure 1 représente le schéma d'un mode de réalisation de l'hydrophone suivant l'invention.

La figure 2 est une courbe explicative du fonctionnement de l'hydrophone.

L'hydrophone selon l'invention a une structure d'interféromètre et comporte sur l'un des chemins optiques de l'interféromètre une fibre optique monomode immergée dans le champ d'onde acoustique à détecter supposé uniforme, de pression P et de fréquence $\omega_s$. Ce champ d'onde acoustique induit par effet élasto-optique une variation d'indice $\Delta n$ de l'indice n de la fibre. Cette variation d'indice se traduit par un déphasage $\Delta\varphi$ fonction de la variation d'indice $\Delta n$, de la longueur l de la fibre immergée et de la longueur d'onde $\lambda$ de l'onde optique :

$$\Delta\varphi(\omega_s) = \frac{2\pi l}{\lambda} \Delta n.$$

Cette variation d'indice $\Delta n$ est égale à $\Delta n_0 \sin \omega_s t$ où $\Delta n_0 = 1/2 \, n^3 \cdot P_e \cdot P/E$, $P_e$ étant la constante photoélastique de la fibre, et E étant le module de YOUNG du matériau formant la fibre (P/E est la contrainte appliquée à la fibre par le champ d'onde acoustique). Pour que le déphasage $\Delta\varphi$ soit mesurable, il est nécessaire que la longueur l de la fibre optique monomode immergée soit grande. Cependant, il est également nécessaire, pour qu'il y ait intégration des effets sur toute la longueur de la fibre, que le temps de propagation dans la fibre immergée ne soit pas trop grand par rapport à la période de l'onde acoustique. A titre d'exemple, si la longueur de la fibre immergée est 600 m, le temps de propagation de l'onde optique dans cette fibre est 3 µs. Pour que l'on puisse admettre que le champ de pression ne varie pas trop vite, il ne faut pas que l'onde acoustique ait une fréquence supérieure à $\simeq$ 160 kHz (période de l'onde acoustique : $\tau_s = 6$ µs, au moins égale au double du temps de propagation dans la fibre).

Pour une fibre monomode en silice d'indice n = 1,5, de constante photo-élastique $P_e = 0,2$ dont le module de YOUNG est $E = 7 \times 10^{10} \, \text{N} \cdot \text{m}^{-2}$, l'amplitude du déphasage induit à la fréquence de l'onde sonore pour 1 m de longueur d'interaction dans un champ de pression de $1 \, \text{N} \, \text{m}^{-2}$ est $4 \cdot 10^{-5}$ rd pour une source laser AsGa ($\lambda = 0,9 \times 10^{-6}$ m).

Les pressions mesurables par l'hydrophone à fibre optique dépendent de la puissance optique incidente, de l'atténuation dans la fibre à la longueur d'onde utilisée, de la sensibilité du photodétecteur recevant le rayonnement résultant des interférences entre l'onde optique qui s'est propagée dans le bras de mesure et l'onde optique qui s'est propagée dans le bras de référence, et de la longueur de la fibre soumise au champ de pression ; un compromis doit être fait entre une augmentation de la longueur de la fibre et la puissance optique disponible sur le photodétecteur compte tenu de l'atténuation introduite par une très grande longueur de fibre.

Pour rester dans les limites de cohérence de la source, il est nécessaire que les trajets optiques dans le bras de mesure, comportant la fibre optique soumise au champ de pression acoustique, et dans le bras de référence soient équivalents. Pour obtenir ce résultat il est avantageux d'utiliser dans le bras de référence, une fibre optique de mêmes caractéristiques que la fibre optique du bras de mesure. Compte tenu des grandes longueurs de fibre à utiliser et pour un encombrement réduit, ces fibres peuvent être enroulées.

Pour qu'un tel dispositif fonctionne dans des conditions satisfaisantes, il est absolument nécessaire que les chemins optiques dans l'interféromètre soient fixés et ne varient pas lorsque le dispositif fonctionne, et, pour que les conditions de propagation de l'onde optique soient assez stables, il est particulièrement intéressant de réaliser les liaisons optiques entre la source, les extrémités des fibres optiques et le détecteur de manière rigide, la technique de l'optique intégrée étant particulièrement adaptée pour permettre le fonctionnement correct d'un tel dispositif. De plus, une telle structure permet d'introduire sur les chemins optiques des microstructures actives commandées électriquement pour améliorer sensiblement le fonctionnement du dispositif.

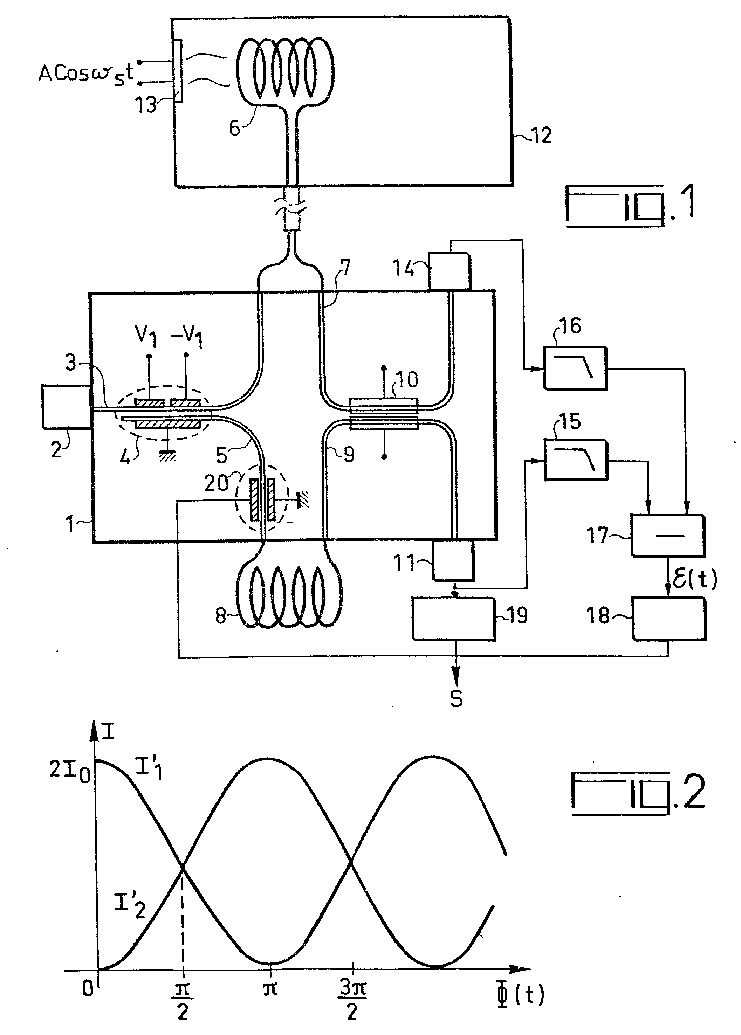

La figure 1 représente un mode de réalisation de l'hydrophone suivant l'invention. Il comporte un substrat électro-optique 1, par exemple en niobate de lithium dans lequel sont réalisés des guides d'onde optique par diffusion de titane, pour réaliser les liaisons optiques. La source de lumière est un laser à semiconducteur 2, AsGa par exemple, couplé par la tranche à un micro-guide 3 réalisé dans le substrat qui reçoit le rayonnement émis par la source. Un coupleur directionnel 4 permet de transférer une partie de la lumière guidée dans le guide 3 à un guide 5, ces guides 3 et 5 dirigeant respectivement le rayonnement vers le bras de mesure et vers le bras de référence. Pour cela, une fibre optique monomode enroulée 6 a une extrémité couplée à la tranche du substrat pour recevoir le rayonnement guidé dans le guide 3 et son autre extrémité couplée à la tranche du substrat pour transmettre le rayonnement émergeant vers un guide 7 de réception. De la même manière, une fibre optique monomode enroulée 8 a une extrémité couplée à la tranche du substrat pour recevoir le rayonnement guidé dans le guide 5 et son autre extrémité couplée à la tranche du substrat pour transmettre le rayonnement émergeant vers un guide 9 de réception.

La fibre optique 6 qui est dans le bras de mesure, est plongée dans le milieu d'interaction acousto-optique 12. Un transducteur 13 électroacoustique émettant l'onde sonore à détecter a été représenté dans le milieu d'interaction. Comme il a été décrit ci-dessus, l'onde acoustique crée dans le milieu des variations de pressions provoquant des variations des paramètres géométriques de la fibre, ces variations induisant par effet électro-optique des variations d'indice dans cette fibre. Il en résulte une modulation de phase de l'onde guidée dans cette fibre à la fréquence de l'onde sonore. Cet effet est faible, mais du fait de la grande longueur de fibre dans laquelle se propage l'onde guidée, la variation de phase due à l'onde acoustique est mesurable. Cette mesure est effectuée par interférométrie, l'onde de référence se propageant dans la fibre optique monomode 8. Cette fibre de référence est placée en dehors du champ acoustique et l'onde optique qu'elle transmet ne subit donc pas de variations dans ses conditions de propagation dues à l'onde acoustique. La sensibilité maximum d'un tel interféromètre est obtenue lorsque le déphasage relatif entre les deux bras est égal à $\pi/2$. Cette condition pourrait être obtenue en créant entre les deux bras un déphasage fixe égal à $\pi/2$, le déphasage variable à la fréquence de l'onde acoustique, dû à l'onde acoustique agissant sur la fibre optique, étant superposé à ce déphasage fixe de façon que les variations faibles de $\Delta\varphi$ soient détectées dans une plage de sensibilité maximum.

En pratique ce déphasage supplémentaire est très difficile à maintenir constant compte tenu de l'influence de l'environnement sur les conditions de propagation, variations de température, contraintes, etc., les deux fibres étant dans des milieux différents.

Le dispositif selon l'invention permet de s'affranchir des variations de phase entre les deux bras de l'interféromètre en ajoutant au déphasage variable dû aux variations dans les conditions de propagation $\varphi_{al}$, un autre déphasage variable $\varphi_{el}$ créé au moyen d'un modulateur de phase à commande électrique placé sur l'un des guides d'onde du circuit optique intégré tel que la somme $\varphi_{al} + \varphi_{el}$ soit sensiblement égale à $\pi/2$, les faibles variations de déphasage dues à l'onde acoustique à la fréquence $\omega_s$ qui se superposent à ce déphasage quasi fixe, étant détectées dans une plage où la sensibilité est maximum.

Pour cela, les guides de réception 7 et 9 recevant le rayonnement émergeant respectivement de la fibre formant bras de mesure 6 et de la fibre formant bras de référence 8 sont couplés sur une longueur d'interaction prédéfinie pour former un coupleur directionnel 10. Le taux de couplage est ajustable par commande électrique, deux électrodes étant prévues à cet effet le long des deux guides. Lorsque le coupleur est ajusté de telle manière que 50 % du rayonnement incident dans un guide d'entrée soit transmis dans chacune des voies de sortie du coupleur, le rayonnement détecté à la sortie de chacune de ces deux voies par des photodétecteurs, respectivement 11 et 14 correspond aux interférences entre les ondes transmises par la fibre de mesure et la fibre de référence. Ces deux voies de sortie étant complémentaires, la somme des intensités des rayonnements détectés est égale à l'intensité du rayonnement incident.

Si $\varphi(t)$ est le déphasage entre les deux bras de l'interféromètre qui n'est pas dû à l'onde acoustique, et $\Delta\varphi(\omega_s) = \beta \sin \omega_s t$ (où $\beta = 2\pi l \, \Delta n/\lambda$), l'intensité détectée par l'un des photodétecteurs est :

$$I_1(t) = 2 \, I_0[1 + \cos(\beta \sin \omega_s t + \varphi(t)]$$

et celle détectée sur l'autre voie est :

$$I_2(t) = 2 \, I_0[1 - \cos(\beta \sin \omega_s t + \varphi(t)],$$

$I_0$ étant l'intensité du rayonnement optique circulant dans la fibre de mesure et dans la fibre de référence.

Les variations de phase à la fréquence de l'onde sonore sont rapides par rapport aux autres variations de phase dues aux variations dans les conditions de propagation dans les deux fibres. Des filtres passe-bas 15 et 16, recevant respectivement les signaux de sortie des détecteurs 11 et 14, délivrent des signaux variables, avec les variations de conditions de propagation, suivant $d(t)$, soit

$$I'_1 = 2 \, I_0[1 + \cos \varphi(t)]$$

et

$$I'_2 = 2 \, I_0[1 - \cos \varphi(t)].$$

Les courbes représentant ces deux signaux sont représentées sur la figure 2.

Si les photodétecteurs ont la même sensibilité et si les filtres ont les mêmes caractéristiques, les signaux de sortie des filtres 15 et 16 sont égaux lorsque $\varphi(t) = \pi/2$. Un circuit 17 permet de faire la différence des signaux de sortie des filtres et délivre un signal d'erreur $\varepsilon(t)$, ce signal d'erreur étant nul lorsque $I'_1 = I'_2$, soit $\varphi(t) = \pi/2$. Pour obtenir ce point de fonctionnement pour le système de détection, le signal $\varepsilon(t)$ est appliqué à un amplificateur 18 ayant des caractéristiques telles que son signal de sortie appliqué aux électrodes d'un modulateur de phase à commande électrique 20 placé sur l'un des guides d'onde du circuit optique intégré, induise un déphasage $\varphi_{el}$ de l'onde optique ; ce déphasage ajouté au déphasage aléatoire $\varphi_{al}$ entre les deux voies (mesure et référence) étant tel que $\varphi(t) = \varphi_{al} + \varphi_{el}$ soit maintenu égal à $\pi/2$ à tout instant.

Le signal de mesure peut alors être obtenu à partir du signal de sortie de l'un des photodétecteurs, par exemple le photodétecteur 11 dont le signal de sortie varie comme :

$$I_1(t) = 2 \, I_0[1 + \cos(\beta \sin \omega_s t + \tfrac{\pi}{2})]$$

au moyen d'un circuit de traitement 19 fournissant un signal S proportionnel au déphasage entre les deux ondes optiques dû à l'onde acoustique.

L'invention n'est pas limitée au mode de réalisation de l'hydrophone précisément décrit et réalisé. En particulier, dans la mesure où la source est une source laser à semiconducteur et les photodétecteurs des photodiodes également à semiconducteur, il est possible d'intégrer ces deux composants sur le substrat électro-optique lui-même. par ailleurs, il serait également possible d'utiliser une source laser à gaz, par exemple un laser Hélium Néon comme source optique. De plus, la fonction de séparation de l'onde optique issue de la source entre le bras de mesure et le bras de référence et la fonction de recombinaison des deux ondes optiques émergeant de ces mêmes bras ont été réalisées au moyen de deux coupleurs à 3 dB commandés électriquement. D'autres moyens actifs ou passifs peuvent assurer cette séparation et cette recombinaison.

**Revendications**

1. Hydrophone à fibre optique monomode fonctionnant par effet élasto-optique, comportant une source laser monomode (2) couplée à une plaquette de circuit optique intégré (1) dans laquelle sont réalisés des moyens de séparation (4) du rayonnement issu de la source vers deux premiers guides optiques intégrés (3, 5) et des moyens de recombinaison (10) du rayonnement guidé par deux seconds guides optiques intégrés (7, 9), une première fibre optique monomode formant bras de mesure (6), destinée à être plongée dans un milieu d'interaction soumis à l'onde acoustique à détecter, et une seconde fibre optique monomode (8) formant bras de référence, ces deux fibres ayant leurs extrémités rigidement couplées respectivement à l'un des premiers et à l'un des seconds guides optiques, l'hydrophone comportant en outre un modulateur de phase à commande électrique (20) agissant sur l'un (5) des guides optiques intégrés pour introduire un déphasage entre les ondes guidées, des moyens de détection (11, 14) du rayonnement émergeant des moyens de recombinaison (10), et un dispositif de traitement (15, 19) des signaux détectés, destiné à fournir un signal de commande au modulateur de phase (20) tel que le déphasage entre les deux bras indépendant de l'onde acoustique à détecter soit maintenu voisin d'un point de sensibilité maximum, le dispositif de traitement délivrant de plus un signal de mesure (S) caractéristique de l'onde acoustique.

2. Hydrophone selon la revendication 1, caractérisé en ce que les moyens de recombinaison (10) du rayonnement comportent deux voies de sortie complémentaires (7, 9), les moyens de détection comportent deux photodétecteurs (11, 14) respectivement couplés à chacune de ces voies de sortie ; le dispositif de traitement comporte des moyens de filtrage passe-bas (15, 16) des signaux issus des photodétecteurs, un circuit (17) permettant de faire la différence entre les signaux émergeant des moyens de filtrage, et un circuit de commande (18) destiné à fournir le signal de commande au modulateur de phase (20), le signal de mesure (S) étant obtenu à la sortie d'un circuit de traitement (19) relié à l'un (11) des photodétecteurs.

3. Hydrophone selon la revendication 1, caractérisé en ce que les moyens de séparation (4) du rayonnement et les moyens de recombinaison (10) du rayonnement sont des coupleurs directionnels ajustables électriquement, des moyens d'alimentation étant prévus pour ajuster les taux de couplage de ces coupleurs.

4. Hydrophone selon l'une quelconque des revendications précédentes, caractérisé en ce que la source (2) est une source laser à semiconducteur rigidement couplée par la tranche à la plaquette de circuit optique intégré (1) au niveau d'un guide optique d'entrée (3) des moyens de séparation (4).

5. Hydrophone selon l'une quelconque des revendications précédentes, caractérisé en ce que les moyens de détection sont formés par des photodiodes (11, 14) à semiconducteur rigidement couplées par la tranche à la plaquette de circuit optique intégré (1) au niveau des guides optiques (7, 9) de sortie des moyens de recombinaison (10).

**Claims**

1. Monomode fiber optic hydrophone operating by elasto-optic effect, comprising a monomode laser source (2) coupled to an optic integrated circuit chip (1) in which separating means (4) are formed for separating radiation emitted by the source between two first integrated optic guides (3, 5) and recombination means (10) for recombination of the radiation guided by two second integrated optic guides (7, 9), a first optic monomode fiber forming a measuring branch (6) intended to be immersed into an interaction medium submitted to the acoustic wave to be detected, and a second optic monomode fiber (8) forming a reference branch, said two fibers having their ends rigidly coupled to one of said first and one of said second optic guides, respectively, the hydrophone further comprising an electrically controlled phase modulator (20) acting on one (5) of the integrated optic guides to introduce a phase shift between the guided waves, detecting means (11, 14) for detecting radiation emerging from the recombination means (10), and a device (15, 19) for processing detected signals and intended to provide a control signal to the phase modulator (20) to maintain the phase shift between the two branches in the neighborhood of a maximum sensitivity point independently of the acoustic wave to be detected, the processing device further delivering a measurement signal (S) which is characteristic of the acoustic wave.

2. Hydrophone in accordance with claim 1, characterized in that the radiation recombination means (10) comprise two complementary output paths (7, 9), the detecting means comprise two photo detectors (11, 14) each coupled to one of said output paths ; the processing device comprising low pass filter means (15, 16) for filtering the signals delivered by the photo detectors, a circuit (17) allowing to provide the difference between the signals issued by the filtering means, and a control circuit (18) intended to provide a control signal to the phase modulator (20), the measurement signal (S) being obtained at the output of a processing circuit (19) connected to one (11) of the photo detectors.

3. Hydrophone in accordance with claim 1, characterized in that the radiation separation means (4) and the radiation recombination means (10) are electrically adjustable directional couplers, feeding means being provided for adjustement of the coupling degrees of said couplers.

4. Hydrophone in accordance with any of the preceding claims, characterized in that the source (2) is a semiconductor laser source rigidly coupled to the edge face of the integrated optic circuit chip (1) at the location of an optic input guide (3) of the separating means (4).

5. Hydrophone in accordance with any of the preceding claims, characterized in that the detection means are formed by semiconductor photo diodes (11, 14) rigidly coupled to the edge face of the integrated optic circuit chip (1) at the location of the optic output guides (7, 9) of the recombination means (10).

**Ansprüche**

1. Monomode-Faseroptik-Unterwassermikrophon, das mit elasto-optischem Effekt arbeitet, mit einer Monomode-Laserquelle (2), die an ein Plättchen (1) mit einem integrierten optischen Kreis angekoppelt ist, wobei in dem Plättchen Trenneinrichtungen (4) zur Trennung der von der Quelle abgegebenen Strahlung zwischen zwei ersten integrierten optischen Leitern (3, 5) und Mittel (10) zum Rekombinieren der durch zwei integrierte optische Leiter (7, 9) geführten Strahlung verwirklicht sind, mit einer ersten optischen monomode-Faser, die einen Meßzweig (6) bildet, der dazu bestimmt ist, in ein Wechselwirkungsmilieu eingetaucht zu werden, das der zu erfassenden Schallwelle ausgesetzt ist, und mit einer zweiten optischen Monomode-Faser (8), die einen Referenzzweig bildet, wobei diese beiden Fasern mit ihren Enden starr an den einen bzw. anderen der zweiten optischen Leiter angekoppelt sind, wobei das Unterwassermikrophon ferner einen Phasenmodulator (20) mit elektrischer Steuerung, der auf einen der integrierten optischen Leiter (5) einwirkt, um eine Phasenverschiebung zwischen den geführten Wellen herbeizuführen, Detektionsmittel (11, 14) zur Erfassung der von den Rekombiniermitteln (10) ausgehenden Strahlung und eine Vorrichtung (15, 19) zur Verarbeitung der erfassten Signale enthält, die dazu bestimmt ist, an den Phasenmodulator (20) ein solches Steuersignal anzulegen, daß die Phasenverschiebung zwischen den beiden Zweigen unabhängig von der zu erfassenden Schallwelle in der Nähe eines Punktes maximaler Empfindlichkeit gehalten wird, wobei die Verarbeitungsvorrichtung ferner ein Meßsignal (S) abgibt, das charakteristisch für die Schallwelle ist.

2. Unterwassermikrophon nach Anspruch 1, dadurch gekennzeichnet, daß die Rekombiniermittel (10) zum Rekombinieren der Strahlung zwei komplementäre Ausgangszweige (7, 9) umfassen, wobei die Detektionsmittel zwei Photodetektoren (11, 14) umfassen, die jeweils an einen der Ausgangszweige angekoppelt sind ; daß die Verarbeitungsvorrichtung Tiefpaß-Filtermittel (15, 16) zum Filtern der von den Photodetektoren abgegebenen Signale, eine Schaltung (17), die es ermöglicht, die Differenz zwischen den von den Filtermitteln ausgehenden Signalen zu bilden, und einen Steuerkreis (18) umfaßt, der dazu bestimmt ist, dem Phasenmodulator (20) das Steuersignal zuzuführen, wobei das Meßsignal (S) am Ausgang einer Verarbeitungsschaltung (19) gewonnen wird, die mit einem (11) der Photodetektoren verbunden ist.

3. Unterwassermikrophon nach Anspruch 1, dadurch gekennzeichnet, daß die Trennmittel (4) zum Trennen der Strahlung und die Rekombiniermittel (10) zum Rekombinieren der Strahlung elektrisch einstellbare Richtkoppler sind, wobei Speisemittel vorgesehen sind, um den Kopplungsgrad dieser Koppler einzustellen.

4. Unterwassermikrophon nach einem der vorstehenden Ansprüche, dadurch gekennzeichnet, daß die Quelle (2) eine Halbleiter -Laserquelle ist, die starr an die Seitenfläche des Plättchens (1) mit dem integrierten optischen Kreis auf der Höhe eines optischen Eingangs-Leiters (3) der Trennmittel (4) angekoppelt ist.

5. Unterwassermikrophon nach einem der vorstehenden Ansprüche, dadurch gekennzeichnet, daß die Detektionsmittel durch Halbleiter-Photodioden (11, 14) gebildet sind, die starr an die Seitenfläche des Plättchens (1) mit dem integrierten optischen Kreis auf der Höhe der optischen Ausgangsleiter (7, 9) der Rekombiniermittel (10) angekoppelt sind.

0 021 945

FIG.1

FIG.2